# EUROPEAN PATENT APPLICATION

(11) **EP 3 599 622 A1**
(43) Date of publication of application: **29.01.2020**
(21) Application number: 18382569.4
(22) Date of filing: 27.07.2018
(51) Int. Cl.: H01F 1/26, H01F 1/37, H01F 41/02

(54) **A METHOD, A SYSTEM AND A PACKAGE FOR PRODUCING A MAGNETIC COMPOSITE**

(71) Applicant: Fundació Institut de Ciències Fotòniques, 08860 Castelldefels (Barcelona) (ES); Institució Catalana de Recerca I Estudis Avançats, 08010 Barcelona (ES)
(72) Inventor: STAVRINADIS, Alexandros, 08860 CASTELLDEFELS (ES); POWELL, Alexander, 08860 CASTELLDEFELS (ES); KONSTANTATOS, Gerasimos, 08860 CASTELLDEFELS (ES); QUIDANT, Romain, 08860 CASTELLDEFELS (ES)
(74) Representative: Ponti & Partners, S.L.P

(57) **Abstract**

The present invention relates to a method for producing a magnetic composite, wherein the method comprises:
- providing a material (G) in a non-continuous solid form;
- providing optically resonant particles (P) dispersed within at least a region of said material (G); and
- exposing at least said optically resonant particles (P) to electromagnetic radiation to be absorbed thereby to optically resonate to generate heat to at least partially fuse together portions of said material (G) in thermal contact therewith.

The optically resonant particles (P) have magnetic properties and/or are adapted to have magnetic properties induced by a stimulus, and said material (G) is a nonmagnetic material.

A system and a package for producing a magnetic composite according to the method of the invention are also provided by the present invention.

## Description

### FIELD OF THE INVENTION

The present invention is in the field of magnetic composites. In particular, the present invention relates to a method, a system, and a package for producing a magnetic composite, by fusing together portions of a non-magnetic material from heat generated by particles that are both optically resonant and magnetic.

### BACKGROUND OF THE INVENTION

Different proposals are known in the art regarding methods for producing a magnetic composite.

Particularly, a number of prior scientific literature and patent documents exist on the field of 3D printing functional objects including objects that exhibit magnetic properties as well as magnetic hybrid organic/inorganic composites.

For example, International Application WO2016/146374A1 describes 3D printing of functional components or parts with embedded functional elements made also with 3D printing, such elements include magnets. The manufacturing method comprises printing a plastic 3D object with channels there within, and then filling the channels with a flowable material that has a functional material, such as a magnetic material, and immobilizing said functional material within the channel.

In addition, US9922759B2 describes fabrication of magnets using additive manufacturing (AM) methods, whether with a material having a magnetic component dissolved therein or by sintering a structure from a powder having a magnetic component, while US9731445B2 discloses additive manufacturing systems and methods for magnetic materials, where the use of a magnetic material matrix and of a non-magnetic material, for mechanical support, is required.

Examples of scientific papers dealing with the subject are Science, 2016, 353, 6307 and Scientific Reports, 2017, 7, 9419.

Some other patent documents related to 3D printing of magnets and magnetic materials are CN106683867A and CN103854844B, which disclose the use of the Fused Deposition Method (FDM) for AM, method which usually relies in the pre-formation of a polymer-inorganic solid composite and then using this in a 3D printer for melting and printing the composite, and CN105419075A and CN106009574A, which relate to the formation of specific polymer-particle magnetic and paramagnetic hybrid composites for 3D printing.

On the other hand, CN104889390B discloses a method for 3D printing manufacturing inorganic solid magnets, particularly permanent magnets, by laser sintering a rare earth permanent magnetic powder material. This method typically requires temperatures approaching the generally high temperatures of the inorganic magnetic materials and this is an energy demanding process, and thus more energy efficient processes are required.

It is therefore necessary to provide an alternative to the state of the art that covers the gaps found therein, doing without the above mentioned requirements associated to the methods for obtaining magnetic composites or objects that are known in the art, specifically without the need to pre-manufacture non-functional objects with channels to be filled by a magnetic material, or the requirements of the AM methods described above, and that constitutes a method that is more energy efficient than the ones of the state of the art.

### SUMMARY OF THE INVENTION

To that end, the present invention relates, in a first aspect, to a method for producing a magnetic composite, wherein the method comprises:
- providing a material in a non-continuous solid form (such as in powder or particulate form);
- providing optically resonant particles dispersed within at least a region of said material; and
- exposing at least said optically resonant particles to electromagnetic radiation to be absorbed thereby to optically resonate to generate heat to at least partially fuse together (generally, by sintering and/or melting) portions of said material in thermal contact therewith.

According to the method of the first aspect of the present invention, the optically resonant particles have magnetic properties and/or are adapted to have magnetic properties induced by a stimulus, and the above mentioned material is a non-magnetic material.

The present inventors discovered that the intrinsic optical resonance properties of magnetic inorganic nanoparticles, and of other types of magnetic particles, can be utilized for manufacturing simple and complex shaped objects made of hybrid composites made of non-magnetic (generally polymer) and magnetic material.

None of the above described requirements existing in the state of the art methods is needed by the method of the first aspect of the invention, particularly no premanufacturing of a 3D object with channels, or of the use of very high temperatures is needed. The pre-formation of a polymer-inorganic solid composite is not either carried out, as the method of the first aspect of the present invention, which is not based on the FDM method and variations of it, pre-forming the composite before using it, for example in a 3D printer, is not necessary, instead the method allows for making the composite directly in, for example, a 3D printer as part of the manufacturing/printing process.

For some embodiments, the optically resonant particles are ferromagnetic, ferrimagnetic, paramagnetic, or superparamagnetic particles, while for other, alternative or complementary, embodiments the optically resonant particles are non-magnetic but adapted to become permanently or temporarily ferromagnetic, ferrimagnetic, paramagnetic, or superparamagnetic, during and after being exposed to the above mentioned stimulus.

The above mentioned stimulus is, for some embodiments, an external magnetic field stimulus and/or a temperature stimulus associated to a temperature which is different than room temperature.

The method of the first aspect of the invention further comprises, for some embodiments, cooling down the at least partially fused material to solidify, to a temperature that is below at least one of its melting temperature, sintering temperature, and glass transition temperature. Such cooling down can be carried out by actively decreasing the temperature of the magnetic composite, for example with some kind of refrigerating means, or just by leaving the magnetic composite to rest to cool down for some time, for example at ambient temperature.

According to some embodiments, the method of the first aspect of the present invention further comprises exposing the optically resonant particles to the above mentioned stimulus before, during and/or after they are provided dispersed within at least said region of the material and/or before, during and/or after they are exposed to said electromagnetic radiation and/or before, during and/or after the at least partially fused material is cooled down to solidify.

For an embodiment, the optically resonant particles have magnetic properties (initially or after being induced by a stimulus) that are permanently or temporarily alterable when submitted to the above mentioned stimulus, generally to an external magnetic field of constant or varying intensity and direction, such as for magnetizing the optically resonant particles or for inducing a change in the individual and collective strength and orientation of the magnetic dipole of the optically resonant particles.

With respect to the non-magnetic material, it is adapted not to have magnetic properties when exposed to any type of stimulus, i.e. it is neither magnetic nor susceptible to be become magnetic.

Generally, the non-magnetic material is a polymeric material, although any other kind of at least partially meltable material can be used according to the method of the first aspect of the present invention.

A non-limiting list of materials that can be used for implementing the non-magnetic material according to the method of the first aspect of the present invention are: Nylon PA12, nylon PA11, nylon PA6, thermoplastic polyurethane (TPU), polyether block amide (PEBA).

In an embodiment, the non-magnetic material can be constituted of particles of diameter 0.001-1000 µm, and preferably of diameter 0.1-100 µm, and most preferably 1-100 µm.

The optically resonant particles and electromagnetic radiation to be absorbed thereby are adapted and arranged so that heat generated by the optically resonant particles when optically resonating is at a temperature that is below the melting, sintering and glass transition temperatures of the optically resonant particles but equal or higher than at least one of the melting temperature, sintering temperature, and glass transition temperature of the non-magnetic material.

The optically resonant particles absorb significantly more of the incident radiation, and heat up considerably at a much greater rate than the non-magnetic material. They then transfer heat to the non-magnetic material, facilitating the fusing together thereof.

Preferably, the non-magnetic material is made not to absorb or to absorb at least 50% less efficiently the electromagnetic radiation compared to the optically resonant particles, so that heat at a temperature which is equal or larger than at least one of the sintering temperature, melting temperature, and glass transition temperature of the non-magnetic material is not generated thereby.

The electromagnetic radiation to which the optically resonant particles are exposed has a wavelength range that at least in part overlaps the absorption wavelength of the optically resonant particles.

For an embodiment, said wavelength includes a specific wavelength at which the optically resonant particles has a resonant peak, whether its strongest resonant peak or not, and/or a wavelength included at least in its absorption resonance spectra.

In the present invention, the electromagnetic radiation can be, for some embodiments, in the form of microwaves, visible light, broadband or narrowband sources of ultraviolet (UV) light, infrared, NIR (Near Infrared), or mid-IR of far-IR electromagnetic waves, or a combination thereof.

A non-limited list of sources for such radiations can be: laser, LED, any type of light lamps, such as halogen lamps and IR-lamps, heated bars, flash lamps, laser (with single wavelength or with a plurality of wavelengths), other broadband or narrowband sources of ultraviolet (UV) light, visible or infrared electromagnetic radiation. The wavelength of the source can be tuned to match the resonance of the optically resonant particles.

In an embodiment, the electromagnetic radiation is produced by a lamp that emits radiation which according to its spectral characteristics can be exclusively considered as being the electromagnetic radiation. In another embodiment, the electromagnetic radiation can be produced by a radiation source which emits radiation for which only a part of can be considered as the electromagnetic radiation.

Since electromagnetic radiation is primarily absorbed by and results to heating of the optically resonant particles, the electromagnetic radiation is preferably partly resonant, and most preferably fully resonant, to the resonance of the optically resonant particles. Such resonance can be any or a combination of the following types of resonance: Mie resonance or/and plasmon resonance, galley whispering mode resonance, electronic transition of charge carriers resonance. In the aforementioned, "partly resonant" refers to the case where the electromagnetic radiation contains some photons of wavelengths which coincide with the wavelengths at which the optically resonant particles exhibit any of the aforementioned types of resonance. In addition, in the aforementioned, "fully resonant" refers to the case where the electromagnetic radiation only contains photons of wavelengths which coincide with the wavelengths at which the optically resonant particles exhibit any of the aforementioned types of resonance.

Ideally, the electromagnetic radiation can be of a wavelength range covering the whole spectrum of the blackbody radiation, including a wavelength range from 100 nm to 3000 nm, preferably from 250 nm to 2000 nm, and more preferably from 350 nm to 2000 nm, since radiation of such wavelengths is usually not absorbed strongly by the non-magnetic material. The optically resonant particles can be tuned so that their strongest resonant peak and/or if non, or multiply resonant, the greatest portion of their output or absorption spectra is in said wavelength ranges.

The electromagnetic radiation can be a radiation of a multiple of wavelengths where at least some of them are absorbed by the optically resonant particles.

With respect to the size of the optically resonant particles, they have an average cross-sectional length that is from 1 nm up to 500 µm (determined, for example, by electron microscopy and/or light microscopy), preferably from 1 nm up to 5 µm, depending on the embodiment, to be adapted to the requested application, and also to provide a desired tuning of the optical properties of the optically resonant particles.

Depending on the embodiment, the optically resonant particles are inorganic nanoparticles and/or microparticles of various shapes, such as spherical particles, or rodshaped particles, or tube-shaped particles, or star-shaped particles, or hollow particles, or platelets or flakes or more complex shapes. In an embodiment, the optically resonant particles are of quasi-spherical shape and of diameter 0.3-10000 nm, more preferably 1-1000 nm, even more preferably 5-500 nm, and most preferably below 100 nm.

For some embodiment, the optically resonant particles are made of at least one of the following materials: Co, Fe, Fe₂O₃, Fe₃O₄, FeOFe₂O₃, NiOFe₂O₃, CuOFe₂O₃, MgOFe₂O₃, MnBi, Ni, MnSb, MnOFe₂O₃, Y₃Fe₅O₁₂, CrO₂, MnAs, Gd, Tb, Dy, EuO, NdFeB, SmCo, SrFe₁₂O₁₉, NiO / Fe (Ferrit), Pt, FePt, FePt-Fe3Pt nanocomposite, CoPt, Fe-Co alloys, Fe-Ni, FePt, FePt-Fe3Pt nanocomposite, Co-Pt, Iron Oxides, Fe₂O₃, Fe3O4 (Magnetite), Ferrites, FeO (Wustite), FeOOH, α-FeOOH (Goethite), Co oxides, Co3O4, and NiO, or any combination or alloy thereof.

The method of the first aspect of the invention comprises, for a preferred embodiment, tailoring the optically resonant particles, including their size, shape, material, and conditions at which they are produced, based on the desired magnetic properties (ferromagnetic, ferrimagnetic, paramagnetic, etc.) to be conferred thereto.

That preferred embodiment is applicable to any of the above listed materials for making the optically resonant particles as well as for any other material that can be used for making the optically resonant particles that is explicitly cited in the present document or indirectly by reference to available bibliography, or that is not cited in the present document but considered appropriate, by the skilled person, to be submitted to the above mentioned tailoring and used for the method for the first aspect of the invention.

Besides those of the above listed materials that are, or can be under certain conditions, at least in part ferromagnetic, other types of ferromagnetic materials can be used to make the optically resonant particles, for some embodiments, including any of the ferromagnetic materials that are optically resonant that are cited in "Magnetic Nanoparticles", Prof. Sergey P. Gubin, First published: 16 September 2009 (Print ISBN:9783527407903 |Online ISBN:9783527627561 |DOI:10.1002/9783527627561).

Generally, the magnetic properties of the optically resonant particles desired to be incorporated in the magnetic composite are those existent at room temperature, i.e. ferromagnetic for, for example, Iron, Steel, Nickel, Cobalt.

However, when the obtained magnetic composite is to be used under a temperature that is different to the room temperature, the desired magnetic properties of the optically resonant particles to be used according to the method of the first aspect of the invention, are those existent at that temperature that is different to the room temperature. For example, when that temperature is above Curie temperature, ferromagnetic properties transform to paramagnetic properties, therefore if the magnetic composite to be obtained is to be used under very high temperatures, above said Curie temperatures, and paramagnetic properties are desired, then the optically resonant particles selected are those that become paramagnetic at that very high temperatures.

Although for some embodiments, the optically resonant particles are made only of one or more materials having magnetic properties and/or that are adapted to have magnetic properties induced by a stimulus, for other embodiments the optically resonant particles have a core and a shell including at least one layer, wherein one of said core and said at least one layer of said shell is made of at least one first material that has said magnetic properties and/or is adapted to have magnetic properties induced by said stimulus, and the other one of said core and said at least one layer of said shell is made of at least one second material that is a non-magnetic material (i.e. a material that does not have magnetic properties and/or is adapted not to have magnetic properties when exposed to any type of stimulus), such as a metal, such as gold.

In other words, the core is made of the first material while the at least one layer of the shell is made of the second material, or vice versa. Depending on the embodiment, the first material and/or the second material are/is optically resonant.

For a variant of said embodiment, the optically resonant particle is a multi-layered particle, i.e. a particle that comprises a multi-layered shell that includes different types of layers, such as one or more layers of said first material, one or more layers of said second material, and/or one or more layers of a dielectric material, such as silica.

In some cases the optical resonance would be due to one layer and the magnetic properties be due to another, but the final multi-layered particle here would be both optically resonant and have magnetic properties (permanent magnet, paramagnetic, ferromagnetic, etc.).

For an embodiment, the method of the first aspect of the present invention comprises producing a magnetic composite with spatially graded magnetic properties, by providing the non-magnetic material and the optically resonant particles according to a spatially graded stoichiometry, meaning spatially graded weight ratio of the non-magnetic material and the optically resonant particles as well as spatially graded composition of the non-magnetic material of the produced magnetic composite.

For the above mentioned embodiment associated to a spatially graded stoichiometry, if the optically resonant particles are the only photothermal source then this would also produce graded mechanical properties, as a different quantity of particles results in a different level of heating and a different level of fusion (generally, melting or sintering).

In order to avoid that producing of graded mechanical properties, for a variant of the above mentioned embodiment, the method of the first aspect of the present invention further comprising providing a non-magnetic electromagnetic radiation absorber (preferably in the form of non-magnetic optically resonant particles) dispersed within the non-magnetic material to generate heat to at least partially fuse together portions of the non-magnetic material in thermal contact therewith, wherein the non-magnetic electromagnetic radiation absorber is distributed within the non-magnetic material so that heat generated thereby added to heat generated by the optically resonant particles result in a uniformly distributed global heat, and then a uniform fusion (generally, melting or sintering) is achieved.

Advantageously, the method of the first aspect of the present invention further comprises providing the optically resonant particles dispersed within at least the above mentioned region of the non-magnetic material, configured and arranged to prevent at least one of: agglomeration and self-sintering of the optically resonant particles with each other.

Particularly, for some embodiments, the method of the first aspect of the present invention comprises providing the optically resonant particles according to the following parameters: distribution and proportion of the optically resonant particles, with respect to the non-magnetic material included in the region within which they are dispersed, wherein the method comprises selecting said parameters:
- to disperse the optically resonant particles within the powder material included in said region, and
- to avoid substantial agglomeration and substantial self-sintering of the optically resonant particles, even during sintering of the powder material.

In the present document the terms "self-sintering" refer to a form of aggregation of the optically resonant particles, which in the context of the present invention is brought about by heating. In this document, this term only refers to the optically resonant particles, as they are the heat sources due to the photothermal effect, and so the sintering of one to another upon heating can be described as self-induced. Conversely, the sintering of the particles/particulates of the non-magnetic material to each other (when the "fusing together" is performed by sintering) is simply referred to as "sintering" in the present document.

This self-sintering may be very similar to mild aggregation, with the particles mechanically attached to one another in such a way that they will not separate on mechanical stirring, sonication, etc., but where they retain their original shape in a way that it could be observed in an electron microscope etc. On the other hand, it also includes cases where the particles have heated so much they melt into each other and become indistinguishable, the extreme case of which is the formation of a single particle made from the melting together of multiple particles. Such a substantial self-sintering is avoided by the present invention.

Preferably, the above mentioned dispersion is an even dispersion.

To utilise optically resonant particles to improve the melting/sintering efficiency of other powders, without substantial agglomeration and self-sintering is non-trivial, and care must be taken to avoid this, via consideration of parameters such as the ones stated above (distribution and proportion of the optically resonant particles), and, for some embodiments, the ones which will be indicated below.

An enhanced melting/sintering of the non-magnetic material is achieved by the present invention, as thanks to the substantial non-agglomeration and non-self-sintering of the optically resonant particles, their heating and optical properties are not adversely affected, not even when dispersed within the non-magnetic material, so that they operate at a maximum efficiency to fuse together portions of the non-magnetic material.

Moreover, by means of the present invention the material properties of the finished product, i.e. the magnetic composite, both optical and mechanical, are not either adversely affected by the optically resonant particles.

In the present document, the terms "substantial agglomeration" and "substantial self-sintering" are used to define the case where a large enough fraction of the optically resonant particles present dispersed in the non-magnetic material have agglomerated so that it causes a substantial spectral change which will be detrimental to either the heating properties and/or the optical properties of the optically resonant particles.

Therefore, said substantial agglomeration and substantial self-sintering can be defined using the absorption spectra of the optically resonant particles, whether they are in a solution, on a planar surface, or in a sintered object, where the optically resonant particles may or may not have been used to initiate sintering.

Substantial agglomeration and substantial self-sintering refer to an agglomeration and self-sintering which causes a change in the absorption spectra of the optically resonant particles in the form of at least one shift in one or more optical resonance peaks above or equal to five times the full-width at half maximum (FWHM) and/or at least a broadening of one or more optical resonance peaks above or equal to five times the FWHM. Here the initial FWHM is defined from measurements of the optically resonant particles before being dispersed in the non-magnetic material, and for example coated in an appropriate anti-agglomeration layer in a well-dispersed solution.

For an embodiment associated to a given shape and material of optically resonant particles in a given non-magnetic material in a non-continuous form, said substantial agglomeration and substantial self-sintering refers to an agglomeration and self-sintering which causes a change in the absorption spectra of the optically resonant particles in the form of at least one shift in one or more optical resonance peaks above or equal to three times the full-width at half maximum (FWHM) and/or at least a broadening of one or more optical resonance peaks above or equal to three times the FWHM.

For another embodiment associated to another given shape and material of optically resonant particles in a given non-magnetic material in a non-continuous form, said substantial agglomeration and substantial self-sintering refers to an agglomeration and self-sintering which causes a change in the absorption spectra of the optically resonant particles in the form of at least one shift in one or more optical resonance peaks above or equal to two times the full-width at half maximum (FWHM) and/or at least a broadening of one or more optical resonance peaks above or equal to two times the FWHM.

For a further embodiment associated to a further given shape and material of optically resonant particles in a given non-magnetic material in a non-continuous form, said substantial agglomeration and substantial self-sintering refers to an agglomeration and self-sintering which causes a change in the absorption spectra of the optically resonant particles in the form of at least one shift in one or more optical resonance peaks above or equal to 1.5 times the full-width at half maximum (FWHM) and/or at least a broadening of one or more optical resonance peaks above or equal to two times the FWHM.

According to an embodiment, the optically resonant particles are coated with an anti-agglomeration coating that is configured to cooperate in the avoiding of the above mentioned substantial agglomeration and substantial self-sintering of the optically resonant particles.

For some embodiments, said anti-agglomeration coating is made to maximize thermal shape stability and/or to maximize thermal chemical stability, wherein, generally, said anti-agglomeration coating is an inorganic and/or organic layer attached to the surface of the optically resonant particles.

According to some embodiments, besides the optically resonant particles the method of the first aspect of the invention comprises providing, within the above mentioned region of the non-magnetic material in a non-continuous form, additional materials which serve various functionalities. For example, in an embodiment, said additional materials are one or more colour pigments, which are used for colouring the magnetic composite. In another embodiment, the additional material is a good conductor of heat and its purpose is to enhance the transfer of heat from the optically resonant particles to the non-magnetic material in a non-continuous form. A non-limiting example of such additional material is flakes of graphene.

Although, for an embodiment the method of the first aspect of the present invention is intended to produce a 3D magnetic composite comprising only one layer or slice (having a thickness above the atomic scale, i.e. being a 3D layer), such as a flexible sheet, for a preferred embodiment the method comprises producing a 3D magnetic composite using a layer-by-layer deposition process, by applying at least a further non-magnetic material in a non-continuous solid form over the already formed layer, which forms a base layer, with optically resonant particles (with magnetic properties and/or are adapted to have magnetic properties induced by a stimulus) already dispersed there within or subsequently provided thereon and dispersed there within (for example, by depositing by droplet deposition a composition including the optically resonant particles on at least a region of said further layer of the non-magnetic material in a non-continuous solid form), and exposing to electromagnetic radiation the optically resonant particles provided on the further layer to make them optically resonate to generate heat to at least partially fuse together particles and/or particulates, of the non-magnetic material in a non-continuous solid form of the further layer, which are in thermal contact therewith.

Additional powder layers can be provided and fused together over the already formed and stacked layers, such that a final 3D magnetic composite is obtained formed by a plurality of selectively formed regions having the same or different cross-sections.

In an embodiment, each of said layers has a thickness which is preferably 0.01-1000 µm, and more preferably 50-200 µm.

When the manufactured magnetic composite/object has a complex shape, if the shape is made of a uniform density of magnetic material (optically resonant particles), according to an embodiment of the method of the first aspect of the invention, then the magnetic field of this shape will be exclusively defined by the shape.

However, for another embodiment (alternative or complementary to the just above described embodiment) of the method of the first aspect of the present invention, as the shape of the magnetic composite/object is formed, different amounts of magnetic material (optically resonant particles) are deposited in each part or layer, which the above described layer-by-layer approach makes much easier than conventional fabrication techniques. This means that the shape of the magnetic composite/object does not have to dictate the magnetic field thereof, which is also defined via the density of magnetic optically resonant particles provided in each region of the shape.

Therefore, according to the method of the first aspect of the invention, the following variables with which to control the magnetic field of the manufactured magnetic composite/object are provided: shape of the magnetic composite/object and dispersion/density/concentration of the magnetic optically resonant particles versus the non-magnetic material.

Similarly to what has been described above, regarding to the embodiment associated to a spatially graded stoichiometry, when different dispersion/density/concentration degrees of the magnetic optically resonant particles are provided for different regions of a layer or for different layers, if the optically resonant particles are the only particles that generate heat on illumination, then the mechanical properties of the manufactured magnetic composite/object will also be affected by the dispersion/density/concentration of the magnetic optically resonant particles, as less particles means less absorption, which means less photothermal heat and thus less fusion (generally, melting or sintering) for those regions with a lower dispersion/density/concentration of magnetic optically resonant particles, which results in a different mechanical behaviour for the regions and/or layers of the obtained magnetic composite/object.

This is solved as described above, i.e. by providing a non-magnetic electromagnetic radiation absorber (preferably in the form of non-magnetic optically resonant particles) dispersed within the non-magnetic material to generate heat to at least partially fuse together portions of the non-magnetic material in thermal contact therewith, wherein the non-magnetic electromagnetic radiation absorber is distributed within the non-magnetic material so that heat generated thereby added to heat generated by the optically resonant particles result in a uniformly distributed global heat, and then a uniform fusion (generally, melting or sintering) is achieved through the regions and layers of the obtained magnetic composite/object.

Moreover, as each layer is formed, or before or after its formation, for an embodiment, the layer is selectively magnetized with a given polarity and strength. The magnetization of each formed layer can vary, such that the final composite comprises numerous layers that can have different shapes and sizes, as well as different levels and polarities of magnetization.

The optically resonant particles are provided at least on said region of the non-magnetic material in a liquid or solution, for some embodiments, or in a dry form, for other embodiments.

For a further embodiment, in order to obtain a magnetic composite with a further densification of magnetic material, the magnetic composite obtained as described above is submitted to one or more further steps, according to the method of the first aspect of the present invention.

That embodiment is particularly interesting if the weight ratio in the magnetic composite between the non-magnetic component material and the magnetic component material is between 10:1 and 1:10, i.e. between 10 - 90 % mass fraction of magnetic material, and mainly when an extremely high density of magnetic material is desired.

Said one or more further steps specifically comprise at least a step of placing into an oven the magnetic object obtained as described above to achieve at least one of the following objectives:
1. To remove the non-magnetic material (generally, a polymer) via heating the magnetic composite above the burning temperature of this non-magnetic material.
2. To cause the densification of the remaining magnetic material and thereby enhance its magnetic properties by heating the object sufficiently to sinter the magnetic particles together.

In addition, for an embodiment, a further step is performed that comprises using a vacuum oven, in order to apply vacuum within said oven when the magnetic composite is placed there into and submitted to the above mentioned heating.

After removal from the oven and cooling, the magnetic composite retrieved from the oven may in some cases need to be placed under a magnetic field or other stimulus to induce the desired magnetic properties, which is carried out for an embodiment of the method of the first aspect of the invention.

In a second aspect, the present invention relates to a system for producing a magnetic composite, comprising:
- at least one supplier device for providing:
   - a material in a non-continuous solid form;
   - optically resonant particles dispersed within at least a region of said material;
and
- a controllable electromagnetic radiation source configured and arranged for exposing said optically resonant particles to electromagnetic radiation that causes the optically resonant particles to optically resonate to heat up and transfer heat to at least partially fuse together portions of said material in thermal contact therewith;
- at least one controller adapted to control said at least one supplier device to provide the material in a non-continuous solid form and the optically resonant particles, and said controllable electromagnetic radiation source to emit said electromagnetic radiation to expose the optically resonant particles thereto.

The system of the second aspect of the present invention further comprises:
- a supply of the optically resonant particles, to feed the at least one supplier, wherein the optically resonant particles of said supply have magnetic properties or are adapted to have magnetic properties induced by a stimulus, and
- a supply of said material in a non-continuous solid form, to feed the at least one supplier, wherein said material in a non-continuous solid form of said supply is a non-magnetic material.

The system of the second aspect of the present invention is adapted to implement the method of the first aspect.

Any of the above listed radiation sources can be used for implementing the controllable electromagnetic radiation source of the system of second aspect of the invention.

For an embodiment of the system of the second aspect of the invention, for which the optical resonant particles are mixed with the non-magnetic material to finally produce a mixture powder material, the system includes a common supplier device which provides said mixture powder material, i.e. provides simultaneously both the non-magnetic material in a non-continuous solid form and the optical resonant particles.

On the other hand, for another embodiment, advantageously at least two supplier devices are included in the system of the second aspect of the present invention, one for the non-magnetic material and another for the optical resonant particles (such as an inkjet print head).

For an embodiment, the system of the second aspect of the invention is a 3D printer (implementing techniques such as selective laser sintering (SLS) or high speed sintering (HSS) using inkjet print heads to provide a composition in the form of an "ink" composition including the optically resonant particles) which comprises also well-known features common to conventional 3D printers (such as movables carriages, ejection systems, actuation and driving mechanisms including electric motors, electric and electronic systems, etc.), which are not described herein in detail to avoid obscuring the present invention.

The system of the second aspect of the invention comprises, for an embodiment, a controller including a memory, program code residing in the memory, and a processor in communication with the memory and configured to execute the program code to generate control signals to apply to at least the controllable radiation source and to the at least one supplier device, to carry out the control of the operations thereof.

The present invention also relates, in a further aspect, to a computer program, comprising computer program components including code instructions that when executed on one or more processors of the controller of the system of the second aspect of the invention implement the above mentioned generation of control signals (in digital form, to be converted to electrical signals) to carry out the control of the operations of the controllable radiation source and of the at least one supplier device.

A third aspect of the present invention relates to a package for producing a magnetic composite, wherein the package comprises, enclosed therein, a supply of optical resonant particles having magnetic properties or being adapted to have magnetic properties induced by a stimulus, and in that the package is configured and arranged to cooperate with the at least one supplier device of the system of the second aspect of the present invention for providing the supply of optical resonant particles by extracting the same from the package.

For an embodiment, said package is an ink print cartridge that comprises also well-known features common to conventional ink print cartridges (such as an ejection system electrically controlled to eject ink, including one or more ink nozzles and associated electric circuitry, etc.), which are not described herein in detail to avoid obscuring the present invention.

In a further aspect, the present invention relates to a magnetic composite obtained by the method of the first aspect of the invention, which combine to a great extend some of the beneficial properties of both the non-magnetic material component, generally a polymer component, such as flexibility and durability under mechanical stress and light weight, and the magnetic properties of the inorganic component, i.e. of optically resonant particles of the object.

This is an important and useful aspect considering that works of the prior art (WO2016/146374A1) describe the need for printing plastic matrixes and channels within objects for subsequently forming functional parts, such as magnetic ones, within these matrixes or substrates or channels. The aforementioned requirements are not applicable and magnetic objects with good mechanical durability can be manufactured without the need for having pre-manufactured non-functional objects or matrixes or substrates of channels.

For the same reason, the present invention inventively distinguishes from what is described in other prior art disclosures (US9731445B2), where the use of a magnetic material matrix is required and where photothermal properties of magnetic inorganic particles are not used for the manufacturing process.

The present invention can be used for printing stand-alone magnetic objects or components of more complex objects which can be used in many types of electromagnetic or electronic or optoelectronic equipment and goods for the industrial or general market. Two examples are magnetic cores of electromagnets, electromagnetic shields in electronic devices.

For an embodiment, the obtained magnetic composite constitutes or forms part of a magnetic sensing device, so that the magnetic properties of the magnetic particles of the composite change upon detection of a magnetic field inducing said change, so that the presence, strength and orientation of different magnetic fields can be detected and even measured when, for some embodiments, the sensing device includes associated measuring components (electric and/or electronic components, processing components, etc.).

The method of the first aspect of the invention can be particularly useful for making flexible or in general mechanically robust complex-shaped 2D and 3D objects of various sizes and of controlled spatially graded magnetic properties.

### BRIEF DESCRIPTION OF THE FIGURES

In the following some preferred embodiments of the invention will be described with reference to the enclosed figure. They are provided only for illustration purposes without however limiting the scope of the invention.

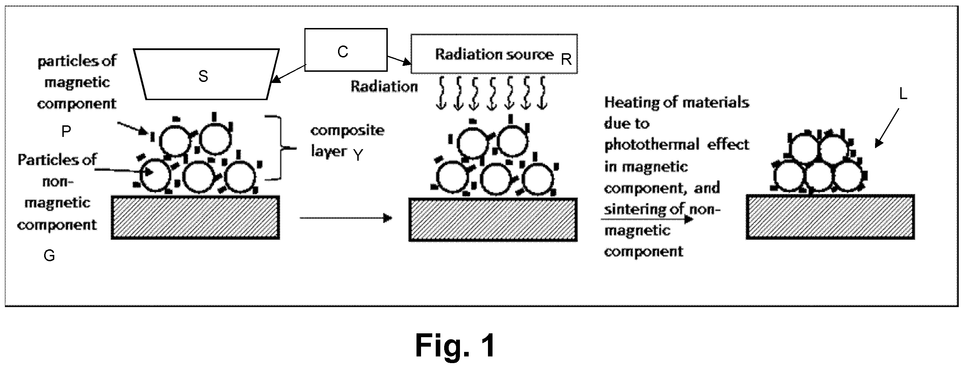

Figure 1 is a schematic representation of the method and system of the present invention, for an embodiment.

### DESCRIPTION OF THE PREFERRED EMBODIMENTS

The method and system of the present invention is schematically depicted in Figure 1, for an embodiment, wherein the method comprises printing 2D or 3D magnetic objects made of a composite material consisting of at least two mixed component materials, namely a polymer organic non-magnetic component material in a powder form G and a second inorganic magnetic component material in the form of particles P.

The terms "magnetic component material" refers to both a material already having magnetic properties and to a component material that acquires magnetic properties induced by a stimulus, as already explained in a previous section.

According to the method of the first aspect of the invention, for the illustrated embodiment:
(a) The non-magnetic material particles G are mixed with the magnetic material particles P, thus forming a composite layer Y (not yet sintered). They are provided with at least one supplier S of the system of the second aspect of the invention under the control of controller C.
(b) The composite layer Y or part of it, or part of a layer formed by repositioning a composite layer, is illuminated on its surface at once and/or in parts successively, by means of controllable electromagnetic radiation source R under the control of controller C of the system of the second aspect of the invention, with electromagnetic radiation which wholly or partly is optically resonant to the resonance of the magnetic component material particles P, for any of the resonance types explained in a previous section.
(c) At the composite layer Y being irradiated with said electromagnetic radiation, the electromagnetic radiation is absorbed by the magnetic component material particles P which are thus heated due to the photothermal effect at a temperature which is smaller than the melting temperature of the magnetic material but equal or greater than the melting temperature and/or sintering temperature or/and glass transition temperature of the non-magnetic component material of particles G which is thus also heated towards being sintered while remaining mixed with the magnetic component material P, and becoming a solid continuous sintered magnetic composite layer L.
(d) The temperature of the sintered magnetic composite layer L is reduced to a temperature which is smaller than the melting temperature and/or sintering temperature or/and glass transition temperature of the non-magnetic component material of particles G, so that the sintered magnetic composite layer L solidifies.

The magnetic component material of particles P is ferromagnetic, ferrimagnetic, or superparamagnetic, or non-magnetic but that can become permanently or temporarily - meaning for time periods greater than 1 hour- ferromagnetic or ferrimagnetic or superparamagnetic during and after being exposed to an external magnetic field and/or when exposed to a temperature which is different than room temperature.

The non-magnetic component material of particles G is not ferromagnetic or ferromagnetic, and generally is a thermoplastic having melting temperature and decomposition temperature smaller than the melting temperature of the magnetic component material of particles P.

The electromagnetic radiation is not absorbed by the non-magnetic component material of particles G or is absorbed weakly, meaning that the portion of it being absorbed by the non-magnetic component material of particles G does not suffice for heating the latter at a temperature which is equal or larger than its sintering temperature or/and melting temperature.

Any of the steps (a)-(d) and the entire process can be repeated by one or more times for the purpose of increasing the concentration of the magnetic component material P in the composite layer Y and/or any of its part or for the purpose for increasing the degree to which the surface in thermal contact therewith is sintered.

After the composite layer Y wholly or partially is sintered an additional layer may be deposited above and in contact with it for the purpose of repeating steps-(a)-(d) for increasing the total thickness and overall dimensions of the sintered magnetic composite layer L towards forming a sintered magnetic object as is generally known in the art related to 3D printing, and such processes can be repeated several times.

Before and/or during and/or after any of the steps (a)-(d) the magnetic material component individually or in the composite may be positioned within a magnetic field of constant or varying intensity and direction for the purpose of altering permanently or temporarily its magnetic properties, such as for magnetizing it or for inducing a change in the individual and collective strength and orientation of the magnetic dipole of the particles P of the magnetic material component within the composite and/or within the final sintered layer and/or within the final sintered 3D object.

The shape and dimensions of the package layer being sintered are chosen as to be the ones of the intended sintered magnetic composite for 2D printing or as the ones of the particular layer of the sintered magnetic object for 3D printing, as is generally known in the art. In either case, the shape and dimensions are defined by the shape and dimensions of the package layer and its sintered part and these are further controlled by the shape and dimensions of the areas containing mixed magnetic and non-magnetic components and/or by the parts of such areas being irradiated with said electromagnetic radiation.

The size of the powder particles G of the non-magnetic component material is 0.001-1000 µm and preferably 0.01-200 µm and most preferably 1-100 µm.

The size of the particles P of the magnetic component material is 0.001-1000 µm and preferably 0.001-10 µm and most preferably 0.001-0.01 µm.

The weight ratio in the composite between the non-magnetic component material and the magnetic component material is 100000:1-1:10 and preferably 1000:1-10:1 and most preferably 1000:1-100:5.

Before, during and after steps (a) to (d) the non-magnetic component material and/or magnetic component material and/or the composite layer Y or L can be heated, by any means such as via thermal convection, to a temperature, which is higher than room temperature but lower than the sintering and melting temperatures of the non-magnetic component material.

The non-magnetic component material of particles G can be a mixture of any materials that individually can be identified as a said non-magnetic component material.

The magnetic component material of particles P can be a mixture of any materials that individually can be identified as a said magnetic component material.

The magnetic component material and/or the non-magnetic component material and/or the composite layer Y can contain or be mixed with other materials that are neither magnetic nor thermoplastic and are used for adding other various functionalities, such as preventing sintering or physical attachment of the magnetic particles P or colouring the sintered composite.

The magnetic component material before being mixed with the non-magnetic component material may be in the form of dry powder or may be dissolved or suspended within a liquid and be deposited and mixed with the-non-magnetic material by being drop casted onto the non-magnetic material. In such case the solvent or solvents of the liquid are chosen as to have a boiling or evaporation temperature which is smaller than sintering temperature of the non-magnetic component material and are also chosen as not being able to dissolve or induce swelling of the particles G of the non-magnetic component material, meaning that the volume of the powder particles G of the latter does not change by more than 50% when is in contact with the solvent for more than 10 hours. The solvent is also chosen as to allow sufficient wetting of the non-magnetic powder G by the amount of liquids being drop casted on its surface.

When the magnetic component material is deposited and mixed with the non-magnetic component material via drop casting, this can be done via any known methods in the art, a non-limiting list of such methods are the inkjet method and the spray method.

The magnetic component material can also be mixed with the non-magnetic component material via other known in the art methods, a non-limiting list of such methods are: mechanical mixing of powders, extrusion method and variations of it, mixing within a liquid possibly under mechanical stirring and/or or ultra-sonication and then allowing the liquid to be evaporated.

For an embodiment, the magnetic and non-magnetic materials are pre-mixed in the form of a package which is transferred to an SLS 3D printer which is equipped with a laser/light source of wavelength suitable for being absorbed by the magnetic component material. Within this printer, part of the said package is transferred for forming the composite layer Y.

For another embodiment, the composite layer Y is formed by first forming a layer made of particles G of the non-magnetic composite material and then depositing on it, or parts of it, the magnetic component material via the use of inkjet heads dispersing liquids containing the magnetic component material particles P. The positioning of the inkjet head as well as the droplet volume and number of droplets and frequency at which the droplets are released are controlled as to control the spatial and gravimetric density of the magnetic component material on the composite layer Y receiving it.

For a slight variation of the just above described embodiment, the composite layer Y is illuminated by light coming from a laser or an array of LEDs or from a broadband light source such as a halogen lamp or a short-wave IR lamp or mid-wave IR lamp or a combination of such light sources.

For another similar embodiment, before, during or after printing/manufacturing the printed/manufactured object a magnetic field, created by a permanent magnet or an electromagnet which may be part thereof and that is enclosed within a 3D printer, is applied to whole or part of the composite layer Y being printed for altering its magnetic properties.

For another similar embodiment, the whole or part of the finally printed/manufactured object is subject to a magnetic field generated by a permanent magnet or electromagnet which is attached to the 3D printer.

### Examples:

In the following, some specific examples of experiments carried out by the present inventors for implementing the method of the first aspect of the invention, are described in detail:

### Example 1:

A colloidal ink of Fe₃O₄ nanoparticles with an intended size of 20 nm, which is an example of particles P of a magnetic (superparamagnetic) component material in the present invention, were synthesized according to a method described in ACS Nano, 2012, 6 (4), pp 3080-3091. The synthesized nanoparticle ink was evidently paramagnetic as indicated by its attraction to a strong magnet which was positioned aside of a glass vial containing the ink, and had a broadband optical absorption spectrum in which a plasmon peak centred at 850 nm and electronic-transition related absorption onsets were measured via optical absorption measurements. The ink was then mixed with particles G of powder of PA12, which is an example of the non-magnetic component material of the present invention. The solvent of the ink (toluene) was allowed to evaporate, and the composite material was used to form a layer Y of thickness 10-500 µm. This layer was positioned atop a hotplate the temperature of which was set to 160 °C and was further illuminated with mid-IR light for heating the layer Y to final temperature of 160 °C. Subsequently, part of the surface of the composite layer Y was illuminated with a laser beam of wavelength of 808 nm, which is an example of the electromagnetic radiation used in the present invention, and the beam was scanned over the surface across a gear-like geometrical pattern. Each point of the pattern on the layer surface being illuminated with surface was sintered due to the photothermal effect induced by the absorption of the laser light by the iron oxide nanoparticles P in the composite, and as an end-result solid continuous gear-like shaped and arrow-shaped objects were formed. These objects had the shame thickness as the thickness of the original layer Y and could be removed by hand from the surrounding composite part of the layer which was not sintered/lasered. The objects were mechanically robust, maintaining their integrity under bending and unbending it. The objects were then placed atop a magnetic stirring plate. When the plate was switched on, thus generating a rotating magnetic field on its surface, the objects were also rotating due to the presence of a rotating force being applied by the plate's rotating magnetic field to the magnetic component of the composite objects. This example thus demonstrates that the present invention can be useful for making magnetic objects that can mechanically respond to external alternating magnetic fields.

### Example 2:

In a second example 1 kg of PA12 was mixed with 1g of commercially available Fe₂O₃ magnetic nanoparticles P (of diameter <100 nm) purchased by a major chemical company. The nanoparticles P were originally in a powder form and for mixing them with particles G of PA12, they were first dispersed in ethanol, the dispersion was sonicated for 10 minutes at a sonicating power of 100W, and the dispersion was then mixed mechanically with the PA12 powder and was left overnight in open air for allowing the ethanol to dry. The dry mixture was then loaded on a commercial SLS 3D printer to which an 808 nm laser was added and the system was used to print a ballerina-shaped 3D object of total length of around 5 cm. The formed object was mechanically robust and this example demonstrates the applicability of the present method for making complex shaped magnetic composite 3D objects.

A person skilled in the art could introduce changes and modifications in the embodiments described without departing from the scope of the invention as it is defined in the attached claims.

## Claims

1. A method for producing a magnetic composite, wherein the method comprises:
- providing a material (G) in a non-continuous solid form;
- providing optically resonant particles (P) dispersed within at least a region of said material (G); and
- exposing at least said optically resonant particles (P) to electromagnetic radiation to be absorbed thereby to optically resonate to generate heat to at least partially fuse together portions of said material (G) in thermal contact therewith;
wherein said optically resonant particles (P) have magnetic properties and/or are adapted to have magnetic properties induced by a stimulus, and said material (G) is a non-magnetic material.

2. A method according to claim 1, wherein said optically resonant particles (P) are:
- ferromagnetic, ferrimagnetic, paramagnetic or superparamagnetic particles; and/or
- are non-magnetic but adapted to become permanently or temporarily ferromagnetic, ferrimagnetic, paramagnetic or superparamagnetic during and after being exposed to said stimulus.

3. A method according to any of the previous claims, wherein said stimulus is an external magnetic field stimulus and/or a temperature stimulus associated to a temperature which is different than room temperature.

4. A method according to any of the previous claims, further comprising exposing the optically resonant particles (P) to said stimulus before, during and/or after they are provided dispersed within at least said region of the material (G) and/or before, during and/or after they are exposed to said electromagnetic radiation and/or before, during and/or after the at least partially fused material is cooled down to solidify.

5. A method according to any of the previous claims, wherein the optically resonant particles (P) have magnetic properties that are permanently or temporarily alterable when submitted to said stimulus.

6. A method according to any of the previous claims, wherein said non-magnetic material (G) is adapted not to have magnetic properties when exposed to any type of stimulus.

7. A method according to any of the previous claims, wherein the optically resonant particles (P) and electromagnetic radiation to be absorbed thereby are adapted and arranged so that heat generated by the optically resonant particles (P) when optically resonating is at a temperature that is below the melting, sintering and glass transition temperatures of the optically resonant particles (P) but equal or higher than at least one of the melting temperature, sintering temperature, and glass transition temperature of the non-magnetic material (G).

8. A method according to any of the previous claims, wherein the non-magnetic material (G) is made not to absorb or to absorb at least 50% less efficiently the electromagnetic radiation compared to the optically resonant particles (P), so that heat at a temperature which is equal or larger than at least one of the sintering temperature, melting temperature, and glass transition temperature of the non-magnetic material (G) is not generated thereby.

9. A method according to any of the previous claims, wherein said non-magnetic material (G) and said optically resonant particles (P) are provided according to a spatially graded stoichiometry for producing a magnetic composite with spatially graded magnetic properties.

10. A method according to claim 9, further comprising providing a non-magnetic electromagnetic radiation absorber dispersed within the non-magnetic material (G) to generate heat to at least partially fuse together portions of the non-magnetic material (G) in thermal contact therewith, wherein said non-magnetic electromagnetic radiation absorber is distributed within the non-magnetic material (G) so that heat generated thereby added to heat generated by the optically resonant particles (P) result in a uniformly distributed global heat.

11. A method according to any of the previous claims, wherein said optically resonant particles (P) are made of at least one of the following materials: Co, Fe, Fe₂O₃, Fe₃O₄, FeOFe₂O₃, NiOFe₂O₃, CuOFe₂O₃, MgOFe₂O₃, MnBi, Ni, MnSb, MnOFe₂O₃, Y₃Fe₅O₁₂, CrO₂, MnAs, Gd, Tb, Dy, EuO, NdFeB, SmCo, SrFe₁₂O₁₉, or a combination thereof.

12. A method according to any of the previous claims, wherein said optically resonant particles (P) have a core and a shell including at least one layer, wherein one of said core and said at least one layer of said shell is made of at least one first material that has said magnetic properties and/or is adapted to have magnetic properties induced by said stimulus, and the other one of said core and said at least one layer of said shell is made of at least one second material that is a non-magnetic material.

13. A method according to any of the previous claims, further comprising providing said optically resonant particles (P) dispersed within at least said region of said material (G), configured and arranged to prevent at least one of: agglomeration and self-sintering of the optically resonant particles (P) with each other.

14. A system for producing a magnetic composite, comprising:
- at least one supplier device (S) for providing:
- a material (G) in a non-continuous solid form;
- optically resonant particles (P) dispersed within at least a region of said material (G);
and
- a controllable electromagnetic radiation source configured and arranged for exposing said optically resonant particles (P) to electromagnetic radiation that causes the optically resonant particles (P) to optically resonate to heat up and transfer heat to at least partially fuse together portions of said material (G) in thermal contact therewith;
- at least one controller (C) adapted to control said at least one supplier device to provide the material (G) in a non-continuous solid form and the optically resonant particles (P), and said controllable electromagnetic radiation source to emit said electromagnetic radiation to expose the optically resonant particles (P) thereto;
wherein the system further comprises:
- a supply of said optically resonant particles (P), to feed said at least one supplier (S), wherein said optically resonant particles (P) of said supply have magnetic properties or are adapted to have magnetic properties induced by a stimulus, and
- a supply of said material (G) in a non-continuous solid form, to feed said at least one supplier (S), wherein said material (G) in a non-continuous solid form of said supply is a non-magnetic material.

15. A package for producing a magnetic composite, wherein the package comprises, enclosed therein, a supply of optical resonant particles (P) having magnetic properties or being adapted to have magnetic properties induced by a stimulus, and in that the package is configured and arranged to cooperate with the at least one supplier device (S) of the system of claim 14 for providing the supply of optical resonant particles (P) by extracting the same from the package.
